# EUROPÄISCHE PATENTANMELDUNG

(11) **EP 4 817 998 A1**
(43) Veröffentlichungstag der Anmeldung: **07.10.2026**
(21) Anmeldenummer: 26170163.5
(22) Anmeldetag: 01.04.2026
(51) Int. Cl.: B62D 5/04, B62D 15/02

(54) **VERFAHREN ZUR SIGNALÜBERTRAGUNG IN EINEM LENKSYSTEM UND LENKSYSTEM**

(30) Priorität: 02.04.2025 DE 102025112983
(71) Anmelder: Volkswagen Aktiengesellschaft, 38440 Wolfsburg (DE)
(72) Erfinder: Kreis, Christopher, 38440 Wolfsburg (DE); Meidt, Heiko, 38440 Wolfsburg (DE); Kötke, Rainer, 38440 Wolfsburg (DE); Schäfer, Eckbert, 38440 Wolfsburg (DE); Atzert, Benjamin, 38440 Wolfsburg (DE); Reinbold, Felix, 38440 Wolfsburg (DE)

(57) **Zusammenfassung**

Die Erfindung betrifft ein Verfahren zur Signalübertragung in einem Lenksystem (1) eines Fahrzeugs, wobei das Lenksystem (1) mindestens einen Positionssensor (5), mindestens einen Feuchtigkeitssensor (6) und mindestens eine Auswerteeinrichtung umfasst, wobei der Feuchtigkeitssensor (6) und der Positionssensor (5) in einem Gehäuse (3) einer Sensoreinheit (2) angeordnet sind, wobei ein Positionssignal (PS) und ein Feuchtigkeitssignal (FS) als gemeinsames Signal (GS) an die Auswerteeinrichtung übertragen werden, sowie ein Lenksystem (1).

## Beschreibung

Die Erfindung betrifft ein Verfahren zur Signalübertragung in einem Lenksystem und ein Lenksystem.

Lenksysteme in Fahrzeugen sind entscheidend für die Steuerung und das Fahrverhalten eines Fahrzeugs. Es gibt verschiedene Arten von Lenksystemen, die auf unterschiedlichen Technologien basieren. Die bekanntesten sind:
1. Mechanische Lenksysteme (Hydraulische Lenkung): Bei der hydraulischen Lenkung wird die Lenkbewegung durch ein hydraulisches System unterstützt, das den Kraftaufwand für den Fahrer reduziert. Sie bestehen in der Regel aus einer Lenkspindel, einer Zahnstange und einem Hydraulikzylinder, der die Lenkbewegung unterstützt.
2. Elektrische Lenksysteme (EPS - Electric Power Steering): Diese Systeme nutzen Elektromotoren anstelle von Hydraulik, um die Lenkbewegung zu unterstützen. Sie können energieeffizienter ausgebildet werden und mehr Flexibilität bieten, da sie u.a. auch mit modernen Fahrerassistenzsystemen (wie Spurhalteassistenten) kombiniert werden können.
3. Steer-by-Wire-Lenksysteme (SbW-Lenksysteme): In diesen Systemen wird die mechanische Verbindung zwischen dem Lenkrad und den Rädern durch elektronische Systeme ersetzt. Hierbei kommen Motoren und Sensoren zum Einsatz, um die Lenkung direkt zu steuern.

Lenksysteme umfassen in der Regel ein Lenkrad und eine Lenksäule, über die ein Fahrzeugführer ein Handlenkmoment auf das System ausüben kann. Manche Systeme umfassen eine Zahnstange und ein Lenkgetriebe, die eine Drehbewegung des Lenkrads in eine lineare Bewegung übersetzen, um hierüber einen Lenkwinkel der mit den Enden der Zahnstange verbundenen lenkbaren Rädern einzustellen. Insbesondere in SbW-Lenksystemen, in denen kein Lenkgetriebe zur Umsetzung der Drehbewegung des Lenkrads existiert, kann anstelle der Zahnstange eine Schubstange verwendet werden, die mit einem so genannten Radaktuator linear bewegt werden kann.

Positionssensoren sind als Bestandteil vieler Lenksysteme unerlässlich. Sie messen u.a. die genaue (Dreh-)Position des Lenkrads, aber auch die Position einer Zahn- oder Schubstange. Die von einem Positionssensor erzeugten Positionssignale werden verwendet, um eine präzise und sichere Positionsregelung zu gewährleisten. Zudem können Positionssensoren notwendig sein, um Fahrerassistenzsysteme wie Spurhalteassistenten oder automatische Parksysteme korrekt zu steuern.

Lenksysteme, insbesondere auch Steer-by-Wire-Systeme, werden jedoch auch insbesondere aufgrund ihrer Sicherheitsrelevanz gegebenenfalls auch mit anderen Sensoren ausgerüstet. Insbesondere umfassen Lenksysteme auch Sensoren, die in der Lage sind, in das System eingedrungenes Wasser zu erkennen.

Die DE 11 2016 003 083 T5 offenbart eine Servolenkungsvorrichtung und eine Servolenkungsvorrichtungs-Steuervorrichtung zur Verwendung in einem Fahrzeug.

Die DE 10 2019 101 614 A1 offenbart eine Sensoreinheit für ein Lenksystem, insbesondere ein Steer-by-Wire Lenksystem.

Die US 2024/123051 A1 offenbart eine Lenkungssteuerungsvorrichtung und ein Lenkungssteuerungsverfahren.

Problematisch ist, dass die Sensoren in einem Lenksystem separat an eine Auswerteeinrichtung wie z.B. ein Steuergerät des Lenksystems angebunden werden, wobei für jeden Sensor ein Signalkabel für ein sensorspezifische Sensorausgangssignal vorgesehen wird. Diese Lösung ist technisch aufwendig und kostenintensiv.

Es stellt sich daher das technische Problem, ein Verfahren zur Signalübertragung in einem Lenksystem und ein Lenksystem zu schaffen, die eine zuverlässige Signalübertragung ermöglichen und hierbei jedoch Kosten und Bauraumbedarf sowie Herstellungsaufwand reduzieren.

Die Lösung des technischen Problems ergib sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zur Signalübertragung in einem Lenksystem eines Fahrzeugs. Das Lenksystem kann wie einleitend bereits erläutert ausgebildet sein, vorzugsweise ist das Lenksystem ein SbW-Lenksystem.

Das Lenksystem umfasst mindestens einen Positionssensor, mindestens einen Feuchtigkeitssensor und mindestens eine Auswerteeinrichtung. Die Auswerteeinrichtung kann als Recheneinrichtung ausgebildet sein oder eine solche umfassen, wobei eine Recheneinrichtung als Mikrocontroller oder integrierte Schaltung ausgebildet oder eine(n) solche(n) umfassen kann. Die Auswerteeinrichtung kann Teil eines Steuergeräts des Lenksystems sein oder dieses bilden. Insbesondere kann das Steuergerät ein Steuergerät eines Radaktuators sein, der ein Drehmoment zum Bewegen einer Zahn- oder Schubstange erzeugt.

Der Positionssensor dient vorzugsweise zum Erfassen einer Drehposition oder einer Position entlang einer linearen Trajektorie. Das Ausgangssignal des Positionssensors kann insbesondere eine Position einer Zahnstange oder Schubstange repräsentieren oder es kann diese Position in Abhängigkeit des Ausgangssignals bestimmt werden. Alternativ kann das Ausgangssignal des Positionssensors eine Drehposition einer Antriebswelle des erwähnten Radaktuators repräsentieren. Selbstverständlich kann der Positionssensor aber auch zum Erfassen der Position anderer Bauteile des Lenksystems dienen.

Der Feuchtigkeitssensor und der Positionssensor sind in einem Gehäuse einer Sensoreinheit angeordnet. Das Gehäuse der Sensoreinheit kann das Gehäuse des Positionssensors sein. Im Gehäuse kann also zumindest eine Sensorkomponente des Positionssensors als auch mindestens eine Sensorkomponente des Feuchtigkeitssensors angeordnet sein. Die Sensoreinheit umfasst also den Positions- sowie den Feuchtigkeitssensor.

Der Feuchtigkeitssensor und der Positionssensor können als, insbesondere baulich, voneinander verschiedene Sensoren ausgebildet sein. Insbesondere kann mit dem Positionssensor keine Feuchtigkeit und mit dem Feuchtigkeitssensor keine Position bestimmt werden. Der Positionssensor kann ein optischer, kapazitiver, induktiver, resistiver oder mechanischer Sensor sein. Der Feuchtigkeitssensor kann ein leitfähigkeitsbasierter, ein kapazitiver, ein resistiver oder ein optischer Sensor sein.

Das Ausgangssignal des Feuchtigkeitssensors kann ein Maß für die Feuchtigkeit, insbesondere in einem Innenvolumen des Gehäuses oder einem Teil dieses Innenvolumens, repräsentieren. Die Feuchtigkeit kann in Form von Wasser vorliegen. Das Maß kann insbesondere ein quantitatives Maß sein. So kann das Feuchtigkeitssignal z.B. eine Größe des Volumens repräsentieren, dass von Feuchtigkeit, insbesondere Wasser, gefüllt ist oder in anderer Weise mit der Menge der im Gehäuse vorhandenen Feuchtigkeit korrelieren. Auch kann das Feuchtigkeitssignal repräsentieren, dass mehr oder weniger als ein vorbestimmtes Maß an Feuchtigkeit im Gehäuse vorhanden ist oder dass die im Gehäuse vorhandene Feuchtigkeit gleich einem vorbestimmten Maß ist. Es ist möglich, dass ein Warnsignal für einen Fahrzeugführer und/oder ein übergeordnetes System erzeugt wird, wenn die Feuchtigkeit ein vorbestimmtes Maß überschreitet, insbesondere länger als eine vorbestimmte Zeitdauer.

Erfindungsgemäß werden das Positionssignal und das Feuchtigkeitssignal als gemeinsames Signal an die Auswerteeinrichtung übertragen. Dies kann bedeuten, dass das gemeinsame Signal sowohl eine Information über die Position und eine Information über die Feuchtigkeit umfasst. Das gemeinsame Signal kann insbesondere ein Datensignal sein. Das Positionssignal und das Feuchtigkeitssignal können über denselben Übertragungsweg, z.B. über dasselbe Datenkabel, und über dieselbe Signalübertragungsschnittstelle des Positionssensors übertragen werden. Somit werden also nicht zwei separate Signale an die Auswerteeinrichtung übertragen, insbesondere über verschiedene Übertragungswege und/oder verschiedene Signalübertragungsschnittstellen.

Hierdurch ergibt sich in vorteilhafter Weise, dass eine zuverlässige Signalübertragung ermöglicht wird, wobei jedoch Kosten und Bauraumbedarf sowie Herstellungsaufwand reduziert werden.

In einer weiteren Ausführungsform umfasst das gemeinsame Signal einen ersten Signalanteil, der das Positionssignal repräsentiert, und einen weiteren Signalanteil, der das Feuchtigkeitssignal repräsentiert. Insbesondere kann ein Signalabschnitt des gemeinsamen Signals einen ersten Signalanteil, der ein vollständiges Positionssignal repräsentiert, und einen zweiten Signalanteil, der einen unvollständiges Feuchtigkeitssignal repräsentiert, umfassen. Ein vollständiges Positions- oder Feuchtigkeitssignal ermöglicht nach der Übertragung die Bestimmung der Position bzw. der Feuchtigkeit. Ein unvollständiges Positions- oder Feuchtigkeitssignal ermöglicht nach der Übertragung keine Bestimmung der Position bzw. der Feuchtigkeit.

Die Signalanteile können verschiedene und insbesondere voneinander trennbare Signalanteile sein. Z.B. können die Signalanteile zeitlich oder frequenztechnisch voneinander trennbare Signalanteile sein. So kann z.B. der erste Signalanteile im gemeinsamen Signal zeitlich vor dem weiteren Signalanteile oder der erste Signalanteil in einem anderen Frequenzbereich als der weitere Signalanteil übertragen werden. Hierdurch ergibt sich in vorteilhafter Weise eine einfache Auswertbarkeit der im gemeinsamen Signal übertragenen Signale.

In einer weiteren Ausführungsform ist eine positionssignalspezifische Übertragungsrate höher als eine feuchtigkeitssignalspezifische Übertragungsrate. Die Übertragungsrate kann repräsentieren, wie oft pro vorbestimmter Zeitdauer, z.B. pro Sekunde, eine vollständige Übertragung des Signals erfolgt. Die vollständige Übertragung bezeichnet die Übertragung aller Informationen, die zur Bestimmung der Position bzw. zur Bestimmung der Feuchtigkeit notwendig sind. Z.B. kann eine positionssignalspezifische Übertragungsrate ein insbesondere ganzzahliges Vielfaches der feuchtigkeitsspezifischen Übertragungsrate sein. Rein beispielhaft können z.B. in einer Sekunde vier Positionssignale und nur ein Feuchtigkeitssignal übertragen werden. Da Positionssignale, insbesondere für eine Regelung, in der Regel öfter gebraucht werden als ein Feuchtigkeitssignal, kann somit in vorteilhafter Weise eine möglichst effiziente Nutzung der Übertragungskapazitäten erfolgen.

In einer weiteren Ausführungsform umfasst das gemeinsame Signal mehrere Signalrahmen, die zeitlich nacheinander übertragen werden, wobei mit einem Signalrahmen ein vollständiges Positionssignal und ein unvollständiges Feuchtigkeitssignal übertragen werden. Die Signalrahmen müssen hierbei nicht zwingend unmittelbar aufeinander folgend übertragen werden, es können auch weitere Signalrahmen, die nicht zur Übertragung eines vollständigen Positionssignals und/oder eines unvollständigen Feuchtigkeitssignals dienen, zwischen zeitlich nacheinander übertragenen Signalrahmen angeordnet sein. Selbstverständlich können die Signalrahmen jedoch auch unmittelbar aufeinander folgend übertragen werden. Ein Signalrahmen kann eine sich zeitlich wiederholende Struktur aus einer Abfolge von Signalen bzw. Signalanteilen bezeichnen, wobei diesen Signalen bzw. Signalanteilen abhängig von ihrer zeitlichen Position innerhalb des Rahmens eine Bedeutung zugeordnet ist. Ein Signalrahmen kann z.B. eine vorbestimmte Anzahl von Bits umfassen. Dies bedeutet, dass durch die Übertragung des Signalrahmens diese vorbestimmte Anzahl Bits übertragen wird. Somit umfasst ein Signalrahmen alle Signalanteile, die zur Übertragung eines vollständigen Positionssignals notwendig sind. Zusätzlich umfasst der Signalrahmen zumindest einen Signalanteil, aber nicht alle Signalanteile, die zur Übertragung eines vollständigen Feuchtigkeitssignals notwendig sind. Benötigt z.B. die Übertragung eines vollständigen Positionssignals eine erste vorbestimmte Anzahl Bits und die Übertragung eines vollständigen Feuchtigkeitssignals eine zweite vorbestimmte Anzahl Bits, so kann der Signalrahmen eine dritte vorbestimmte Anzahl Bits umfassen, wobei die dritte Anzahl größer als die erste Anzahl, aber kleiner als die Summe der ersten und der zweiten Anzahl ist. Dann kann eine erste Anzahl von Bits des Signalrahmens zur Übertragung des vollständigen Positionssignals und die verbleibende Anzahl von Bits des Signalrahmens zur Übertragung des unvollständigen Feuchtigkeitssignals genutzt werden. Hierdurch ergibt sich in vorteilhafter Weise eine einfach implementierbare Signalübertragung für die verschiedenen Signale mit unterschiedlichen Übertragungsraten.

In einer weiteren Ausführungsform wird ein vollständiges Feuchtigkeitssignal auf mindestens zwei Signalrahmen aufgeteilt. Dies kann bedeuten, dass in einem ersten Signalrahmen ein erster Signalanteil des Feuchtigkeitssignals und in mindestens einem weiteren Signalrahmen ein weiterer Signalanteil des Feuchtigkeitssignals übertragen wird, wobei das vollständige Feuchtigkeitssignal erst nach der Übertragung der mehreren Anteile vollständig übertragen ist und somit die Bestimmung der Feuchtigkeit ermöglicht. Z.B. kann das Feuchtigkeitssignal auf vier Signalrahmen aufgeteilt werden. Die Aufteilung ist aber abhängig von einer systemspezifischen Soll-Übertragungsrate des Feuchtigkeitssignals. Hierdurch ergibt sich in vorteilhafter Weise eine zuverlässige und einfach implementierbare Signalübertragung für das Feuchtigkeitssignal mit einer gewünschten Übertragungsrate.

In einer weiteren Ausführungsform wird das gemeinsame Signal von einer Verarbeitungseinrichtung des Positionssensors bereitgestellt. Die Verarbeitungseinrichtung kann eine Recheneinrichtung sein. Die Verarbeitungseinrichtung kann ebenfalls in einem Gehäuse der Sensoreinheit angeordnet sein. Die Verarbeitungseinrichtung kann insbesondere ein Rohsignal, das von dem Positionssensor bzw. einer Sensorkomponente des Positionssensors erzeugt wird, verarbeiten. Die Verarbeitungseinrichtung kann auch ein Rohsignal, das von dem Feuchtigkeitssensor bzw. einer Sensorkomponente des Feuchtigkeitssensors erzeugt wird, verarbeiten.

Beide Sensorkomponenten können im Gehäuse der Sensoreinheit angeordnet sein. Die Verarbeitungseinrichtung kann hierbei sowohl das Positions(roh)signal als auch das Feuchtigkeits(roh)signal verarbeiten. Z.B. kann ein (Roh)Signal gefiltert und/oder digitalisiert werden. Erfolgt eine Signalübertragung über Signalrahmen, so kann die Verarbeitungseinrichtung die erläuterte Aufteilung der Signale auf die einzelnen Signalrahmen ermöglichen. Somit wird in vorteilhafter Weise eine einfache und zuverlässige Bereitstellung des gemeinsamen Signals ermöglicht.

In einer weiteren Ausführungsform repräsentiert das Feuchtigkeitssignal ein Volumen der im Gehäuse vorhandenen Feuchtigkeit. Dies und entsprechende technische Vorteile wurden vorhergehend bereits erläutert.

Weiter vorgeschlagen wird ein Lenksystem eines Fahrzeugs, wobei das Lenksystem mindestens einen Positionssensor, mindestens einen Feuchtigkeitssensor und mindestens eine Auswerteeinrichtung umfasst, wobei der Positionssensor und der Feuchtigkeitssensor in einem Gehäuse einer Sensoreinheit angeordnet sind.

Erfindungsgemäß ist das Lenksystem konfiguriert, ein Verfahren gemäß einer der in dieser Offenbarung beschriebenen Ausführungsformen auszuführen. Hierdurch ergibt sich in vorteilhafter Weise ein Lenksystem, welches das erläuterte Verfahren mit den ebenfalls bereits erläuterten technischen Vorteilen durchführen kann. Das Lenksystem, insbesondere der Positionssensor, kann auch die vorhergehend erläuterte Verarbeitungseinrichtung umfassen. Auch kann das Lenksystem die vorhergehend erläuterten Sensorkomponenten umfassen.

Das Lenksystem kann ein Lenksystem mit einem achsparallelen Antrieb (APA-Lenksystem). Dieses kann ein Kugelgewindetriebe mit einem Riemen umfassen, über den ein Elektromotor (Radaktuator) mit einem Spindelabschnitt einer Zahnstange bzw. einer Spur- oder Schubstange gekoppelt ist. Allerdings kann das Lenksystem auch in anderer Form ausgebildet sein, z.B. als Zahnstangenlenksystem, insbesondere als so genanntes Single- oder Dual-Pinion-Lenksysteme. Das Lenksystem kann auch als RECPS-System ausgebildet sein.

In einer weiteren Ausführungsform dient der Positionssensor zur Bestimmung einer Position einer Schub- oder Zahnstange des Lenksystems. Somit wird in vorteilhafter Weise eine Betriebssicherheit des Lenksystems verbessert, da mit dem genannten Sensor eine in der Regel sicherheitskritische Komponente auf vorhandene und gegebenenfalls kritische Feuchtigkeit überwacht werden kann.

Der Positionssensor kann insbesondere als Rotorlagesensor ausgebildet sein, dessen Ausgangssignal eine Drehposition einer Antriebswelle des erwähnten Radaktuators repräsentiert. Alternativ kann der Positionssensor zur Bestimmung einer Drehposition einer Mutter eines Kugelgewindetriebs ausgebildet sein. Insbesondere, aber nicht ausschließlich, in diesem Fall kann das Lenksystem einen Kugelgewindetrieb umfassen, der insbesondere Teil eines Getriebes ist, das eine Drehbewegung einer Antriebswelle eines Radaktuators in eine Linearbewegung der Schub- oder Zahnstange umsetzt. Das Getriebe kann auch den erläuterten Riemen umfassen. Dieser oder zumindest ein Teil davon kann ebenfalls im Gehäuse der Sensoreinheit angeordnet sein und sich insbesondere durch ein Innenvolumen des Gehäuses erstrecken. In diesem Fall kann der Riemen der Feuchtigkeit im Gehäuse ausgesetzt sein, wobei einer zu hohe Feuchtigkeit mittel- oder langfristig eine Riemenqualität nachteilig beeinflussen kann. Eine verminderte Riemenqualität kann zu einem Riemensprung führen, was wiederum die Güte einer Positionsregelung nachteilig beeinflussen kann. Das vorgeschlagene Verfahren ermöglicht in vorteilhafter Weise eine frühzeitige Erkennung einer für den Riemen kritischen Feuchtigkeit und kann genutzt werden, um z.B. ein entsprechendes Warnsignal für einen Fahrzeugführer oder ein übergeordnetes System zu erzeugen.

In einer weiteren Ausführungsform dient der Positionssensor zur Bestimmung einer Drehposition einer Mutter eines Kugelgewindetriebs. Dies und die entsprechenden technischen Vorteile wurden vorhergehend erläutert.

Weiter beschrieben wird ein Fahrzeug mit einem Lenksystem gemäß einer der in dieser Offenbarung beschriebenen Ausführungsformen.

Die Erfindung wird anhand von Ausführungsbeispielen näher erläutert. Die Figuren zeigen:
- Fig. 1: ein schematisches Blockschaltbild von Bestandteilen eines erfindungsgemäßen Lenksystems,
- Fig. 2: eine schematische Darstellung einer Signalübertragung,
- Fig. 3: eine weitere schematische Darstellung einer Signalübertragung und
- Fig. 4: einen schematischen Ausschnitt eines Lenksystems.

Nachfolgend bezeichnen gleiche Bezugszeichen Elemente mit gleichen oder ähnlichen technischen Merkmalen.

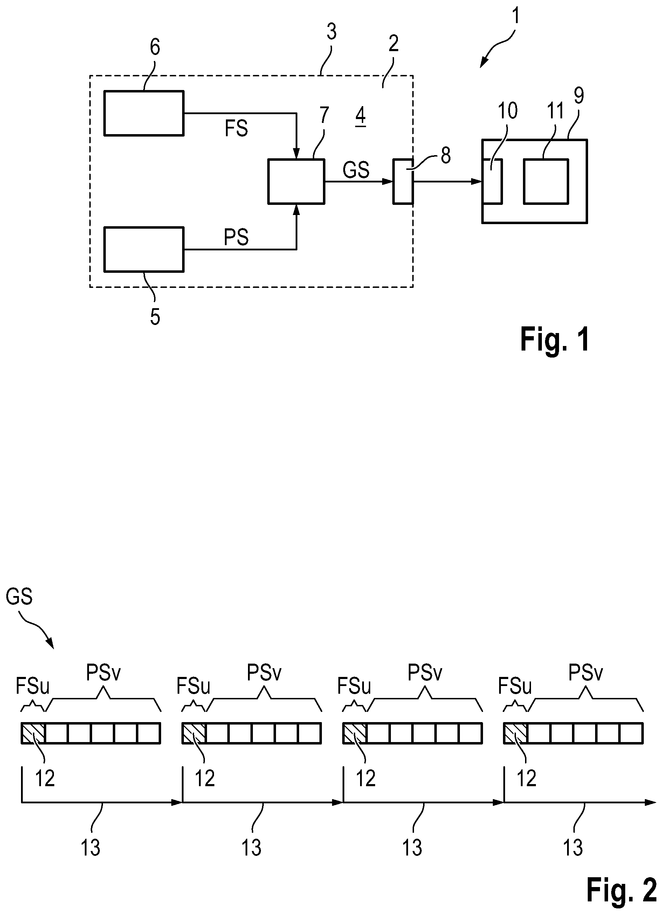

Fig. 1 zeigt ein schematisches Blockschaltbild von Bestandteilen eines erfindungsgemäßen Lenksystems 1. Das Lenksystem 1 umfasst eine Sensoreinheit 2 mit einem Gehäuse 3, in dessen Innenvolumen 4 ein Positionssensor 5 und ein Feuchtigkeitssensor 6 angeordnet sind.

Weiter umfasst das Lenksystem, insbesondere die Sensoreinheit 2, eine Verarbeitungseinrichtung 7 sowie eine Signalübertragungsschnittstelle 8. Auch die Verarbeitungseinrichtung 7 ist in dem Gehäuse 3 angeordnet.

Der Positionssensor 5 erzeugt ein Positionssignal PS, welches an die Verarbeitungseinrichtung 7 übertragen wird. Der Feuchtigkeitssensor 6 erzeugt ein Feuchtigkeitssignal FS, welches ebenfalls an die Verarbeitungseinrichtung 7 übertragen wird. Die Verarbeitungseinrichtung 7 kann die Signale PS, FS verarbeiten, insbesondere filtern und/oder digitalisieren. Weiter stellt die Verarbeitungseinrichtung 7 ein gemeinsames Signal GS bereit, welches dann über die Signalübertragungsschnittstelle an ein Steuergerät 9 des Lenksystems 1 übertragen wird. Das Steuergerät 9 umfasst eine Signalübertragungsschnittstelle 10 und eine als Recheneinrichtung 11 ausgebildete Auswerteeinrichtung des Lenksystems zur weiteren Verarbeitung des gemeinsamen Signals, insbesondere zur Extraktion des Positionssignals PS und des Feuchtigkeitssignals FS aus dem gemeinsamen Signal GS.

Das gemeinsame Signal GS kann insbesondere einen ersten Signalanteil, der das Positionssignal PS repräsentiert, und einen weiteren Signalanteil, der das Feuchtigkeitssignal FS repräsentiert, aufweisen.

Fig. 2 zeigt eine schematische Darstellung einer Signalübertragung eines gemeinsamen Signals GS. Das gemeinsame Signal GS umfasst mehrere Signalrahmen 12, die zeitlich nacheinander übertragen werden. Schematisch dargestellt sind Zeitabschnitte 13, in denen jeweils ein Signalrahmen 12 übertragen wird. Rein exemplarisch umfasst ein Signalrahmen 12 sechs Bit, wobei ein erstes Bit zur Übertragung eines Teils des Feuchtigkeitssignals FS, also eine unvollständigen Feuchtigkeitssignals FSu dient, was durch eine Schraffur des ersten Bits symbolisiert wird. Die verbleibenden fünf Bit dienen zur Übertragung eines vollständigen Positionssignals PSv. Somit wird also in einem Signalrahmen 12 ein vollständiges Positionssignal PSv und ein unvollständiges Feuchtigkeitssignal FSu übertragen. Ein vollständiges Positionssignal PSv ermöglicht die Bestimmung der Position insbesondere durch die Recheneinrichtung 11 des Steuergeräts 9. Ein unvollständiges Feuchtigkeitssignal FSu ermöglicht keine (genaue) Bestimmung der Feuchtigkeit, insbesondere durch die Recheneinrichtung 11 des Steuergeräts 9.

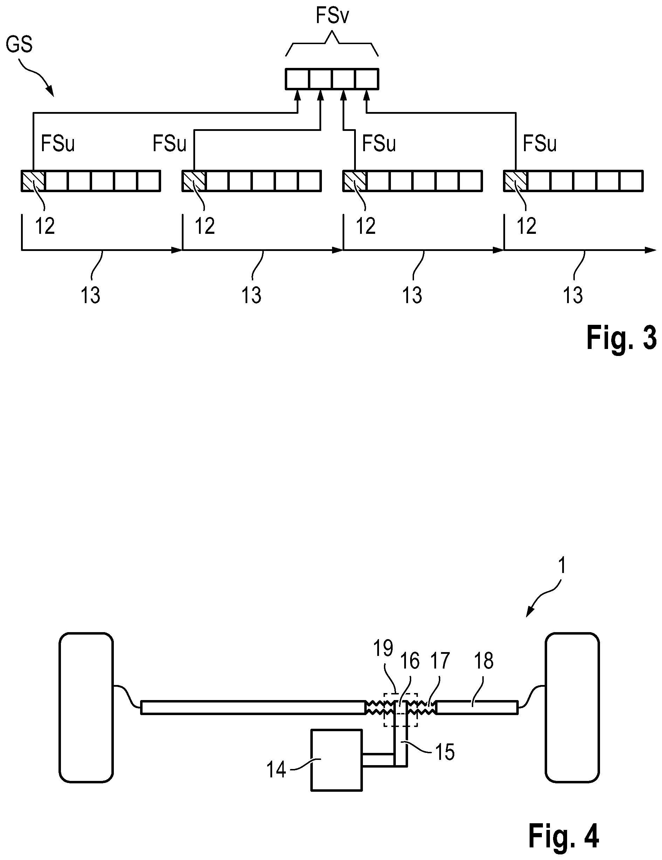

Fig. 3 zeigt eine weitere schematische Darstellung einer Signalübertragung eines gemeinsamen Signals GS, welches wie in Fig. 2 dargestellt ebenfalls mehrere Signalrahmen 12 umfasst, die in Zeitabschnitten 13 nacheinander übertragen werden. Diesbezüglich kann auf die Ausführungen zu Fig. 2 verwiesen werden. Während jeder Signalrahmen 12 ein vollständiges Positionssignal PSv überträgt, werden die unvollständigen Feuchtigkeitssignale FSu zu einem vollständigen Feuchtigkeitssignal FSv zusammengesetzt, insbesondere von der Recheneinrichtung 11 des Steuergeräts 9. Somit liegt im dargestellten Ausführungsbeispiel also nach der Übertragung von vier Signalrahmen 12 ein vollständiges Feuchtigkeitssignal FSv zur Weiterverarbeitung vor. Ein vollständiges Feuchtigkeitssignal FSv ermöglicht die Bestimmung der Feuchtigkeit insbesondere durch die Recheneinrichtung 11 des Steuergeräts 9. Im gleichen Zeitraum wurden vier vollständige Positionssignale PSv übertragen. Somit ergibt sich, dass, bezogen auf ein vollständiges Signal, eine positionssignalspezifische Übertragungsrate höher ist als eine feuchtigkeitssignalspezifische Übertragungsrate.

Fig. 4 zeigt einen schematischen Ausschnitt aus einem Lenksystem 1. Das dargestellte Lenksystem 1 ist insbesondere als APA-Lenksystem ausgebildet und umfasst einen Radaktuator 14, der einen Riemen 15 antreibt. Der Riemen 15 wiederum überträgt eine Drehbewegung auf eine Mutter 16 eines Kugelgewindetriebs, der mit einem Spindelabschnitt 17 einer Schubstange 18 wechselwirkt, um eine Linearbewegung dieser Schubstange 18 und somit der Lenkbewegung der lenkbaren Räder zu erzeugen. Schematisch dargestellt ist eine Sensoreinheit 19, die einen Positionssensor und einen Feuchtigkeitssensor (in Fig. 4 nicht ersichtlich) in dem entsprechenden Gehäuse 3 umfasst. Der Positionssensor umfasst z.B. Winkelscheiben (nicht dargestellt), die optisch, magnetisch oder in anderer Weise detektiert werden können, wobei hierdurch eine Drehstellung der Mutter 16 erfassbar ist. Die von dem Positionssensor und dem Feuchtigkeitssensor bereitgestellten Ausgangssignale können dann, wie in Bezug auf Fig. 1 erläutert, als gemeinsames Signal GS an ein Steuergerät 9 übertragen werden.

### Bezugszeichenliste

- 1: Lenksystem
- 2: Sensoreinheit
- 3: Gehäuse
- 4: Innenvolumen
- 5: Positionssensor
- 6: Feuchtigkeitssensor
- 7: Verarbeitungseinrichtung
- 8: Signalübertragungsschnittstelle
- 9: Steuergerät
- 10: Signalübertragungsschnittstelle
- 11: Recheneinrichtung
- 12: Signalrahmen
- 13: Zeitabschnitt
- 14: Radaktuator
- 15: Riemen
- 16: Mutter
- 17: Spindelabschnitt
- 18: Schubstange
- 19: Sensoreinrichtung
- FS: Feuchtigkeitssignal
- FSu: unvollständiges Feuchtigkeitssignal
- FSv: vollständiges Feuchtigkeitssignal
- GS: gemeinsames Signal
- PS: Positionssignal
- PSv: vollständiges Positionssignal

## Patentansprüche

1. Verfahren zur Signalübertragung in einem Lenksystem (1) eines Fahrzeugs, wobei das Lenksystem (1) mindestens einen Positionssensor (5), mindestens einen Feuchtigkeitssensor (6) und mindestens eine Auswerteeinrichtung umfasst, wobei der Feuchtigkeitssensor (6) und der Positionssensor (5) in einem Gehäuse (3) einer Sensoreinheit (2) angeordnet sind,
**dadurch gekennzeichnet, dass**
ein Positionssignal (PS) und ein Feuchtigkeitssignal (FS) als gemeinsames Signal (GS) an die Auswerteeinrichtung übertragen werden.

2. Verfahren nach Anspruch 1, **dadurch gekennzeichnet, dass** das gemeinsame Signal (GS) einen ersten Signalanteil, der das Positionssignal (PS) repräsentiert, und einen weiteren Signalanteil umfasst, der das Feuchtigkeitssignal (FS) repräsentiert.

3. Verfahren nach einem der vorangegangenen Ansprüche, **dadurch gekennzeichnet, dass** eine positionssignalspezifische Übertragungsrate höher ist als eine feuchtigkeitssignalspezifische Übertragungsrate.

4. Verfahren nach einem der vorangegangenen Ansprüche, **dadurch gekennzeichnet, dass** das gemeinsame Signal (GS) mehrere Signalrahmen (12) umfasst, die zeitlich nacheinander übertragen werden, wobei mit einem Signalrahmen (12) ein vollständiges Positionssignal (PSv) und ein unvollständiges Feuchtigkeitssignal (PSu) übertragen werden.

5. Verfahren nach einem der vorangegangenen Ansprüche, **dadurch gekennzeichnet, dass** ein vollständiges Feuchtigkeitssignal (FSv) auf mindestens zwei Signalrahmen 12) aufgeteilt wird.

6. Verfahren nach einem der vorangegangenen Ansprüche, **dadurch gekennzeichnet, dass** das gemeinsame Signal (GS) von einer Verarbeitungseinrichtung (7) der Sensoreinheit (2) bereitgestellt wird.

7. Verfahren nach einem der vorangegangenen Ansprüche, **dadurch gekennzeichnet, dass** das Feuchtigkeitssignal (FS) ein Volumen der im Gehäuse (3) vorhandenen Feuchtigkeit repräsentiert.

8. Lenksystem (1) eines Fahrzeugs, wobei das Lenksystem (1) mindestens einen Positionssensor (5), mindestens einen Feuchtigkeitssensor (6) und mindestens eine Auswerteeinrichtung umfasst, wobei der Feuchtigkeitssensor (6) und der Positionssensor (5) in einem Gehäuse (3) einer Sensoreinheit (2) angeordnet sind,
**dadurch gekennzeichnet, dass**
das Lenksystem (1) konfiguriert ist, ein Verfahren gemäß einem der Ansprüche 1 bis 7 auszuführen.

9. Lenksystem (1) nach Anspruch 8, **dadurch gekennzeichnet, dass** der Positionssensor (5) zur Bestimmung einer Position einer Schub- oder Zahnstange (18) des Lenksystems (1) dient.

10. Lenksystem (1) nach Anspruch 8 oder 9, **dadurch gekennzeichnet, dass** der Positionssensor (5) zur Bestimmung einer Drehposition einer Mutter (16) eines Kugelgewindetriebs dient.
